# EUROPEAN PATENT SPECIFICATION

(11) **EP 0 610 705 B1**
(45) Date of publication and mention of the grant of the patent: **03.06.1998**
(21) Application number: 94100946.6
(22) Date of filing: 24.01.1994
(51) Int. Cl.: B24B 19/02, B23Q 39/02

(54) **Combined grinding machine for internal spline**
Kombinierte Schleifmaschine für Innennuten
Rectifieuse combinée pour cannelures internes

(30) Priority: 08.02.1993 CN 93227249
(43) Date of publication of application: 17.08.1994
(73) Proprietor: Xu, Xian Hua, Shenyang City (CN)
(72) Inventor: Xu, Xian Hua, Shenyang City (CN)
(74) Representative: Goddar, Heinz J., Dr.

(56) References cited:
- GB-A- 2 203 079
- GB-A- 2 219 536
- MACHINERY AND PRODUCTION ENGINEERING, vol.129, no.3329, 29 September 1976 pages 383 - 385 A W ASTROP 'grinding internal splines with a boron nitride wheel'

## Description

The present invention relates to a new and practical type of grinder, especially to a combined grinder for internal spline grinding.

The invention is based on Chinese patent CN 88 216 959.5 "Spline Side Grinder for Internal Spline" and realizes an improvement thereof. According to the general technology that is used by prior art several mounting and dismounting procedures are required in order to finish grinding of one particular workpiece. Mounting and dismounting of the workpiece is required between any of the grinding steps, i.e. grinding in bore, grinding an end face, and grinding the side of internal spline. Such mounting and dismounting results in low efficiency, high equipment investment, large area requirements, and unstable quality of the processed parts.

An example for grinding internal splines is given by the publication "Machinery and Production Engineering, vol. 129, No. 3329, 29. September 1976, pages 383 - 385; A. W. Astrop: Grinding Internal Splines with a Boron Nitride Wheel". In this publication it is disclosed how to perform internal spline grinding in an elaborate manner, by use of a boron nitride wheel. Due to the described technique it is possible to grind internal splines to finish size at a single pass. The particular reason for the achievements of subject publication is related to the material of the grinding wheel and is further induced by a special eccentric construction of the workhead spindle. However, subject publication neglects the disadvantages that are related to mounting and dismounting between several successive grinding steps which are usually required for finishing manufacture of a workpiece.

Therefore, it is an object of the present invention to supply a grinder for internal spline that makes mounting and dismounting between successive grinding steps dispensable.

Such object is solved by providing a grinding machine that can finish grinding of a bore, end face grinding and grinding a side of internal spline by one time clamping the workpiece, resulting in high quality, high efficiency, and low clamping deviation.

The grinding machine according to the present invention comprises a machine body, a vertical shaft and a working table mounted to said machine body, and grinding means. The vertical shaft comprises main slideways that are carrying a main sliding plate which is movably mounted to the slideways. A locking mechanism is installed in the main sliding plate. The working table of the grinding machine is carrying a rotary table with clamping means for clamping a workpiece. Further, the working table comprises a rotating mechanism for rotating the rotary table, and a driving unit, placed at one end of the working table, comprising a hydraulic oil cylinder or a servo motor for driving the working table. The grinding means according to the present invention are comprising a bore grinding head and a spline side grinding head mounted to slideways of the main sliding plate of the vertical shaft. Further an end grinding head is provided, mounted to the machine body. Due to the described set-up the grinding means can work on a workpiece without dismounting and mounting of a workpiece with respect to the clamping means between the manufacturing steps. The driving unit is provided to force the working table successively into three working positions, namely the position of clamping a workpiece, a position of grinding for a side of bore spline, and a position of grinding for bore and end face, so that all faces can be ground with one clamping.

The present invention is particularly advantageous, since the workpiece, once it is fixed by the clamping means, can be ground by any of the grinding means, i.e. it will be ground on an end face, the bore grinding head will be applied, and the internal side splines can be ground. The whole procedure is performed with one time clamping. As a result, time is saved for clamping and aligning. In prior art manufacturing problems occur due to eccentricity of inside and outside diameters. Such problems, due to several times clamping are avoided by the present invention.

The invention will be illustrated by the following description with reference to the attached figures.
- Figure 1: is a front view of the grinding machine according to the present invention.
- Figure 2: is a left side view of the grinding machine of figure 1.

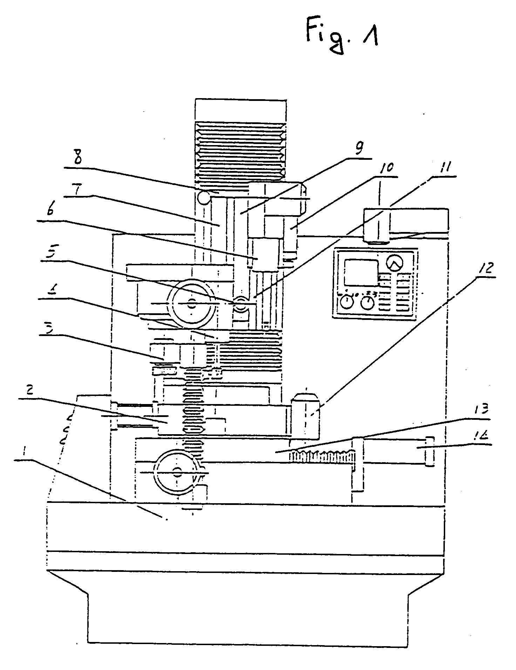

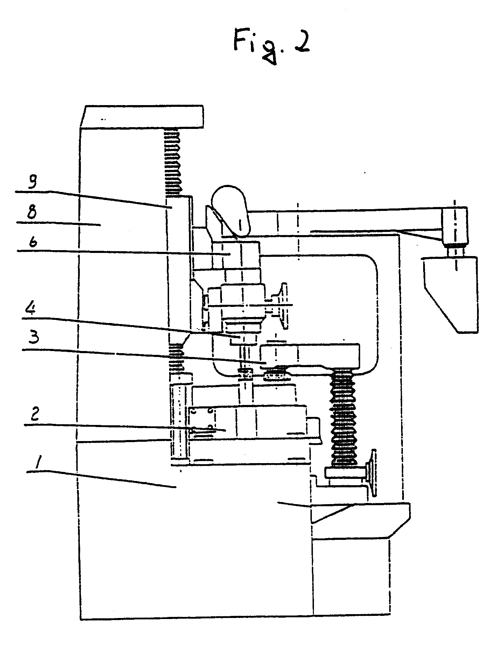

In figures 1 and 2 a grinding machine according to the present invention is illustrated. The base of the machine is built by a machine body 1. A working table 13 and a vertical shaft 8 are mounted to the machine body 1.

The working table 13 is carrying a rotary table 2 which is provided with clamping means 5. The clamping means 5 are for clamping a workpiece. Further, a rotating mechanism 12 for rotating the rotary table 2 is provided. In order to force the working table 13 into its respective working positions a driving unit 14, comprising a hydraulic oil cylinder or a servo motor is placed at one end of the working table 13. Sliding means 7, 11 are mounted to the vertical shaft 8. The sliding means 7, 11 are carrying a main sliding plate 9 which is movably mounted thereto. Further, a locking mechanism is installed in the main sliding plate 9. Two grinding means 4, 6, namely a bore grinding head 4 and a spline side grinding head 6 are mounted to the sliding means 7, 11 of the sliding plate 9 of the vertical shaft 8. An end grinding head 3 is mounted to the machine body 1.

## Claims

1. A grinding machine for internal splines composed of a machine body (1), a vertical shaft (8), and a working table (13) mounted to said machine body (1) and grinding means (3, 4, 6)
characterized in that
said vertical shaft (8) comprising main slideways, carrying a main sliding plate (9), movably mounted to said slideways, and a locking mechanism being installed in said main sliding plate (9);
said working table (13) carrying a rotary table (2) with clamping means (5) for clamping a workpiece, a rotating mechanism (12) for rotating said rotary table (2), and a driving unit (14), placed at one end of said working table (13), comprising a hydraulic oil cylinder or a servo motor for driving said working table (13); and
said grinding means (3, 4, 6) comprising a bore grinding head (4) and a spline side grinding head (6), mounted to slideways (7, 11) of said main sliding plate (9) of said vertical shaft (8), and an end grinding head (3) mounted to said machine body (1);
said driving unit (14) forcing the working table (13) successively into three working positions, namely the position of clamping a workpiece, a position of grinding for a side of bore spline, and a position of grinding for bore and end face, thereby allowing all faces to be ground with one clamping.

## Patentansprüche

1. Schleifmaschine für Innennuten, die ein Maschinengehäuse (1) eine vertikale Welle (8), einen an dem Maschinengehäuse (1) angebrachten Arbeitstisch (13) sowie Schleifvorrichtungen (3, 4, 6) aufweist,
dadurch gekennzeichnet, daß
die vertikale Welle (8) Haupt-Gleitführungen aufweist, die eine beweglich an den Gleitführungen angebrachte Haupt-Gleitplatte (9) tragen, sowie einen an der Haupt-Gleitplatte (9) installierten Verriegelungsmechanismus;
der Arbeitstisch (13) einen Drehtisch (2) mit Einspannvorrichtungen (5) zum Einspannen eines Werkstückes, einen Drehmechanismus (12) zum Drehen des Drehtisches (2) sowie eine an einem Ende des Arbeitstisches (13) angeordnete Antriebseinheit (14) mit einem hydraulischen Ölzylinder oder einem Servomotor zum Antreiben des Arbeitstisches (13) trägt; und
die Schleifvorrichtungen (3, 4, 6), einen Bohrungs-Schleifkopf (4) und einen Seitennuten-Schleifkopf (6) aufweisen, der an Gleitführungen (7, 11) der Haupt-Gleitplatte (9) der vertikalen Welle (8) angebracht sind, sowie einen an dem Maschinengehäuse (1) angebrachten End-Schleifkopf (3);
wobei die Antriebseinheit (14) den Arbeitstisch (13) aufeinanderfolgend in drei Arbeitsstellungen überführt, nämlich in die Stellung zum Einspannen eines Werkstückes, in eine Stellung zum Schleifen einer Seite einer Bohrnut und in eine Stellung zum Schleifen einer Bohrung sowie einer Endfläche, wodurch es möglich ist, alle Flächen mit einer Einspannung zu schleifen.

## Revendications

1. Rectifieuse pour cannelures internes, comprenant un corps de machine (1), un arbre vertical (8) et une table de travail (13) montés sur ledit corps de machine (1), et des moyens de rectification (3, 4, 6), caractérisée par le fait que
ledit arbre vertical (8) comprend des glissières principales, qui portent une plaque coulissante principale (9), montée de façon mobile sur lesdites glissières, et un mécanisme de fixation est installé dans ladite plaque coulissante principale (9);
ladite table de travail (13) porte une table tournante (2) munie de moyens de fixation (5) pour fixer une pièce travaillée, un mécanisme rotatif (12) pour faire tourner ladite table tournante (2), et une unité de commande (14), placée à une extrémité de ladite table de travail (13), comprenant un piston hydraulique à huile ou un servomoteur pour entraîner ladite table de travail (13); et
lesdits moyens de rectification (3, 4, 6) comprennent une tête de rectification d'alésage (4) et une tête de rectification de côté de cannelure (6), montées sur des glissières (7, 11) de ladite plaque coulissante principale (9) dudit arbre vertical (8), et une tête de rectification en bout (3) montée sur ledit corps de machine (1);
ladite unité de commande (14) forçant la table de travail (13) à prendre successivement trois positions de travail, à savoir la position de fixation d'une pièce travaillée, une position de rectification d'un côté de cannelure, et une position de rectification d'un alésage et d'une surface de bout, permettant ainsi de rectifier toutes les surfaces en fixant une seule fois la pièce usinée.
